# EUROPÄISCHE PATENTSCHRIFT

(11) **EP 3 678 876 B1**
(45) Veröffentlichungstag und Bekanntmachung des Hinweises auf die Patenterteilung: **11.08.2021**
(21) Anmeldenummer: 18734091.4
(22) Anmeldetag: 07.06.2018
(51) Int. Cl.: B60C 11/12, B60C 11/03

(54) **FAHRZEUGLUFTREIFEN**
PNEUMATIC TYRE FOR VEHICLES
PNEUMATIQUE POUR VÉHICULES

(30) Priorität: 07.09.2017 DE 102017215742
(43) Veröffentlichungstag der Anmeldung: 15.07.2020
(73) Patentinhaber: Continental Reifen Deutschland GmbH, 30165 Hannover (DE)
(72) Erfinder: BAUER, Claudia, 30419 Hannover (DE); BERGER, Christoph, 30149 Hannover (DE); WIESE, Klaus, 30419 Hannover (DE)
(74) Vertreter: Continental Corporation
(86) Internationale Anmeldenummer: PCT/EP2018/064948
(87) Internationale Veröffentlichungsnummer: WO 2019/048092

(56) Entgegenhaltungen:
- WO-A1-2015/190391
- JP-A- 2004 314 758
- JP-B2- 3 828 258

## Beschreibung

Die Erfindung betrifft einen Fahrzeugluftreifen mit einem laufrichtungsgebundenen Laufstreifen mit Profilblöcken mit einem beim Abrollen des Reifens bei Vorwärtsfahrt zuerst in den Untergrund eintretenden einlaufenden Blockrandbereich und einem auslaufenden Blockrandbereich, wobei die Profilblöcke jeweils mit zumindest einer Gruppe aus zumindest zwei Einschnitten versehen sind, welche eine Breite von 0,4 mm bis 1,0 mm und eine Tiefe von 70% bis 100% der Profiltiefe aufweisen, in Draufsicht parallel zueinander sowie zur axialer Richtung unter einem Winkel von 0° bis zu 45° verlaufen, im Querschnitt und in radialer Richtung betrachtet einen in radialer Richtung verlaufenden äußeren Abschnitt, zumindest einen bogenartig verlaufenden mittleren Abschnitt und einen in radialer Richtung verlaufenden inneren Abschnitt aufweisen, wobei innerhalb jeder Gruppe von Einschnitten die radial äußeren und die radial inneren Abschnitte eine übereinstimmende radiale Erstreckung aufweisen und die bogenartig verlaufenden mittleren Abschnitte gleich orientiert sind und wobei Profilblöcke vorgesehen sind, die eine Gruppe von Einschnitten enthalten, deren bogenartig verlaufenden mittleren Abschnitte vom einlaufenden Blockrandbereich wegweisen.

Ein Fahrzeugluftreifen der eingangs genannten Art ist beispielsweise aus der JP 2004 314 758 A bekannt. Die in den Profilblöcken ausgebildeten Einschnitte verlaufen in Draufsicht in axialer Richtung und weisen eine Breite von 0,4 mm bis 2,0 mm sowie eine Tiefe von beispielsweise 7,0 mm auf. Der bogenartig verlaufende mittlere Abschnitt der Einschnitte weist, im Querschnitt der Profilblöcke betrachtet, die Form eines aufgestellten basislosen gleichschenkeligen Trapezes auf. Die Mitte des Teilabschnittes des Einschnittes, welcher den radial inneren Schenkel des Trapezes des mittleren Abschnittes bildet, befindet sich auf zirka 50% der Tiefe des Einschnittes. Der den radial äußeren Schenkel des Trapezes des mittleren Abschnittes bildende Abschnitt verläuft in einem Tiefenbereich von 15% bis 30% der Tiefe des Einschnittes. Derart ausgeführte Eischnitte sollen die Brems- und Traktionseigenschaften des Reifens auf eis- und schneebedeckten Fahrbahnen verbessern.

Aus der JP 3 828 258 B2 ist ein Fahrzeugluftreifen mit einem Laufstreifen mit Profilblöcken bekannt, welche jeweils mit einer Gruppe von in Draufsicht in axialer Richtung verlaufenden Einschnitten versehen sind. Jeder Einschnitt ist, im Querschnitt und in radialer Richtung betrachtet, zick-zack-förmig ausgeführt und weist - analog zu einer Wellenform und bezogen auf eine in radialer Richtung verlaufende Mittelebene - eine konstante Amplitude auf. Innerhalb jedes Profilblockes folgt ein Einschnitt mit einer größeren Amplitude, d.h. einer stärker ausgeprägten Zick-Zack-Form, abwechselnd auf einen Einschnitt mit einer kleineren Amplitude, d.h. einer weniger stark ausgeprägten Zick-Zack-Form. Solche Einschnitte sollen die Steifigkeit der Profilblöcke im Hinblick auf die Fahreigenschaften auf Eis und/oder Schnee günstig beeinflussen.

Die WO 2015 190 391 A1 offenbart einen Fahrzeugluftreifen mit einem Laufstreifen mit Profilblöcken, in welchen sich in Draufsicht in axialer Richtung erstreckende Einschnitte ausgebildet sind. Die Einschnitte sind in Draufsicht in Gestalt von aneinander anschließenden, abwechselnd in die eine und in die andere Umfangsrichtung weisenden, basislosen gleichschenkeligen Trapezen ausgeführt und setzen sich, im Querschnitt und in radialer Richtung betrachtet, aus einem radial äußeren Abschnitt, einem mittleren Abschnitt und einem inneren Abschnitt zusammen. Der radial äußere und der radial innere Abschnitt verlaufen, im Querschnitt des Einschnittes betrachtet, zur radialen Richtung unter übereinstimmenden Winkeln und sind zur radialen Richtung weniger stark geneigt als der zwischen ihnen verlaufende mittlere Abschnitt. Derart ausgeführte Einschnitte sollen für die Eisgriffeigenschaften vorteilhaft sein.

Im Hinblick auf ein möglichst gleichmäßiges Abriebbild des Laufstreifens sind die bislang bekannten Einschnitte nicht zufriedenstellend.

Der Erfindung liegt daher die Aufgabe zugrunde, bei einem Fahrzeugluftreifen der eingangs genannten Art, die Einschnitte derart zu gestalten, dass die Profilblöcke des Laufstreifens gleichmäßiger abreiben.

Die gestellte Aufgabe wird erfindungsgemäß dadurch gelöst, dass die mittleren Abschnitte der zu jener Gruppe gehörenden Einschnitte, deren bogenartig verlaufenden mittleren Abschnitte vom einlaufenden Blockrandbereich wegweisen, im Querschnitt betrachtet, senkrecht zu einer in radialer Richtung durch den äußeren Abschnitt verlaufenden Linie, bezogen auf die Mittellinie der Einschnitte unterschiedliche maximale Auslenkungen aufweisen, wobei die maximale Auslenkung des mittleren Abschnittes des am nächsten zum einlaufenden Blockrandbereich befindlichen Einschnittes größer ist als der maximale Auslenkung des mittleren Abschnittes des am nächsten zum auslaufenden Blockrandbereich befindlichen Einschnittes.

Durch die erfindungsgemäße spezielle Gestaltung der auf unterschiedliche Weise bogenartig verlaufenden mittleren Abschnitte der Einschnitte gelingt es, das Kippverhalten der Blöcke unter Traktionsbelastung und unter Bremsbelastung zu optimieren. Der bogenartig verlaufende mittlere Abschnitt des Einschnittes, welcher sich am nächsten zum einlaufenden Blockrandbereich befindet, ist innerhalb seiner Gruppe am stärksten ausgeprägt. Im einlaufenden Blockrandbereich bzw. in dem einlaufenden randseitigen Blocksegment des Blockes ist dadurch das Ausmaß der Kippbewegung des Blockes unter Traktions- und unter Bremsbelastung gegenüber den weiteren Blocksegmenten des Blockes deutlich eingeschränkt. Da dieser Blockbereich beim Fahren besonders stark belastet wird, gelingt es, durch die erfindungsgemäß gestalteten Einschnitte das Kippverhalten des Blockes insgesamt zu vergleichsmäßigen, wodurch der Block gegenüber bekannten Blöcken deutlich gleichmäßiger abreibt. Durch die derartige Beeinflussung des Kippverhaltens des Blockes bleibt zusätzlich eine hohe Kontaktfläche zur Fahrbahn erhalten, wodurch die Griffeigenschaften verbessert sind.

Das Ausmaß der erwähnten Kippbewegung ist auf eine für das Abriebverhalten besonders vorteilhafte Weise eingeschränkt, wenn die maximale Auslenkung des vom einlaufenden Blockrandbereich wegweisenden bogenartig verlaufenden mittleren Abschnittes des am nächsten zum einlaufenden Blockrandbereich befindlichen Einschnittes 0,9 mm bis 2,0 mm beträgt.

Gemäß einer bevorzugten Ausführungsvariante ist vorgesehen, dass die maximale Auslenkung des vom einlaufenden Blockrandbereich wegweisenden bogenartig verlaufenden mittleren Abschnittes des am nächsten zum auslaufenden Blockrandbereich befindlichen Einschnittes 0,1 mm bis 1,0 mm beträgt. Im auslaufenden Blockrandbereich ist dadurch das Ausmaß der Kippbewegung des Blockes unter Traktions- und unter Bremsbelastung weniger eingeschränkt als im Bereich der weiteren Blocksegmente des Blockes. Der Block weist dadurch insgesamt ein sehr gleichmäßiges Kippverhalten auf.

Bevorzugter Weise sind im Laufstreifen Profilblöcke mit einer Gruppe aus zwei Einschnitten mit vom einlaufenden Blockrandbereich wegweisenden bogenartigen mittleren Abschnitten vorgesehen. Zwei Einschnitte aufweisende Gruppen lassen sich besonders gut in unterschiedlich gestalteten Profilblöcke, insbesondere auch in jenen mit etwas geringeren Umfangslängen, einbringen und beeinflussen in diesen auf die beschriebene vorteilhafte Weise das Kippverhalten des Blockes und das Abriebverhalten.

Des Weiteren ist es von Vorteil, wenn Profilblöcke mit einer Gruppe aus drei Einschnitten mit vom einlaufenden Blockrandbereich wegweisenden bogenartigen mittleren Abschnitten vorgesehen sind. Solche Blöcke tragen insbesondere auch zu Verbesserung der Handlingeigenschaften bei.

Profilblöcke mit einer Gruppe aus drei Einschnitten reiben besonders gleichmäßig ab, wenn die maximale Auslenkung des vom einlaufenden Blockrandbereich wegweisenden bogenartig verlaufenden mittleren Abschnittes des von den drei Einschnitten mittleren Einschnittes zumindest der maximalen Auslenkung des mittleren Abschnittes des am nächsten zum auslaufenden Blockrandbereich befindlichen Einschnittes und höchstens der maximalen Auslenkung des mittleren Abschnittes des am nächsten zum einlaufenden Blockrandbereich befindlichen Einschnittes entspricht. Das Kippverhalten eines solchen Blockes ist auf die beim Fahren bzw. Bremsen auf den Block einwirkenden Traktions- und Bremskräfte besonders gut abgestimmt.

Eine weitere bevorzugte Ausführungsvariante ist dadurch gekennzeichnet, dass, im Querschnitt betrachtet, ein auf der maximal ausgelenkten Stelle der bogenartig verlaufenden mittleren Abschnitte der Einschnitte liegender Punkt in einer Tiefe von 25% bis 50%, insbesondere von mindestens 32%, der Tiefe der Einschnitte liegt. Durch diese Maßnahme lässt sich das Kippverhalten des Blockes zusätzlich vergleichmäßigen.

Ferner lässt sich das Kippverhalten und damit das Abriebverhalten auf vorteilhafte Weise beeinflussen, wenn innerhalb der Gruppen von Einschnitten, deren bogenartig verlaufenden mittleren Abschnitte vom einlaufenden Blockrandbereich wegweisen, Einschnitte vorgesehen sind, welche zwei bogenartig verlaufende mittlere Abschnitte aufweisen. Die Kippbewegung lässt sich dadurch stärker einschränken, was insbesondere bei Profilblöcken mit größeren Umfangslängen sehr vorteilhaft sein kann.

Gemäß einer bevorzugten Ausführungsvariante ist vorgesehen, dass der bogenartig verlaufende mittlere Abschnitt des am nächsten zum auslaufenden Blockrandbereich befindlichen Einschnittes, im Querschnitt betrachtet und auf seine Mittellinie bezogen, zur nächstliegenden Blockflanke einen Abstand von mindestens 3,0 mm aufweist. Derart bleibt eine gewisse Gummistärke am Blockrandbereich des entsprechenden Blocksegmentes im Bereich des bogenartig verlaufenden mittleren Abschnittes erhalten. Dies trägt ebenfalls zu einem gleichmäßigen Kippverhalten des Blockes bei.

Gemäß einer weiteren bevorzugten Ausführungsvariante sind im Laufstreifen Profilblöcke vorgesehen, welche mit zwei Gruppen von Einschnitten mit bogenartig verlaufenden mittleren Abschnitten versehen sind, wobei die in der einen Gruppe befindlichen Einschnitte zu den in der anderen Gruppe befindlichen Einschnitten, im Querschnitt betrachtet, symmetrisch angeordnet und ausgebildet sind. Diese Variante trägt insbesondere bei Profilblöcken mit größeren Umfangslängen über die beschriebenen Effekte zu einer deutlichen Vergleichmäßigung des Kippverhaltens bei. Insbesondere ist bei dieser Variante das Kippverhalten unter Traktionsbelastung und das Kippverhalten unter Bremsbelastung besonders gut aneinander angeglichen, sodass Profilblöcke größerer Umfangslängen ebenfalls sehr gleichmäßig abreiben.

Im Zusammenhang mit dieser bevorzugten Ausführungsvariante ist es zusätzlich von Vorteil, wenn Profilblöcke vorgesehen sind, welche zwischen den zwei Gruppen von Einschnitten zumindest einen in radialer Richtung sowie mittig verlaufenden Einschnitt aufweisen, insbesondere einen einzigen derartigen Einschnitt oder zwei derartige Einschnitte aufweisen. Dadurch gelingt ein gewisse Entkopplung der unter Traktionsbelastung beanspruchten Blockbereiche und der unter Bremsbelastung beanspruchten Blockbereiche, wodurch das Kippverhalten sowohl unter Traktionsbelastung als auch unter Bremsbelastung zusätzlich vorteilhaft beeinflusst wird.

In diesem Zusammenhang ist zusätzlich von Vorteil, wenn der mittlere Abschnitt der beiden Einschnitte, welche aus unterschiedlichen Gruppen stammen und benachbart zum mittig verlaufenden Einschnitt ausgebildet sind, im Querschnitt betrachtet und auf die Mittellinien der Einschnitte bezogen, zum mittig verlaufenden Einschnitt einen Abstand von mindestens 3,0 mm aufweist.

Gemäß einer weiteren bevorzugten Ausführungsvariante sind die Profilblöcke, welche zumindest die Gruppe von Einschnitten enthalten, deren bogenartig verlaufenden mittleren Abschnitte vom einlaufenden Blockrandbereich wegweisen, in dem zwischen schulterseitigen Blockreihen befindlichen mittleren Bereich des Laufstreifens vorgesehen. Gemäß einer weiteren bevorzugten Ausführungsvariante sind die Profilblöcke, welche zumindest die Gruppe von Einschnitten enthalten, deren bogenartig verlaufenden mittleren Abschnitte vom einlaufenden Blockrandbereich wegweisen, in zumindest einer schulterseitigen Blockreihe vorgesehen.

Es ist ferner bevorzugt, wenn die Einschnitte aus Gruppen von Einschnitten, welche in Profilblöcken von schulterseitigen Blockreihen ausgebildet sind, in Draufsicht einen innerhalb der Bodenaufstandsfläche befindlichen Hauptabschnitt aufweisen, welcher in Gestalt von aneinander anschließenden, abwechselnd in die eine und in die andere Umfangsrichtung weisenden, basislosen gleichschenkeligen Trapezen ausgeführt ist. Solche "trapezförmigen" Einschnitte weisen ausgeprägte Queranteile auf, die insbesondere für die Seitenführung und die Quersteifigkeit auf winterlichen Fahrbahnen besonders vorteilhaft sind.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 eine Draufsicht auf schulterseitige Blöcke eines Laufstreifens eines Fahrzeugluftreifens mit einer ersten Ausführungsvariante der Erfindung,
Fig. 2 einen Schnitt entlang der Linie II-II der Fig. 1 und
Fig. 3 in einem zu Fig. 2 analogen Schnitt eine zweite Ausführungsvariante der Erfindung.

Erfindungsgemäß ausgeführte Fahrzeugluftreifen sind insbesondere Winterreifen in Radialbauart für Personenkraftwagen, Vans oder Light-Trucks. Die Profiltiefe der Laufstreifen der Reifen beträgt 6,5 mm bis 9,2 mm.

Im Rahmen der gegenständlichen Erfindung sind unter in Draufsicht parallel zueinander verlaufenden Einschnitten solche zu verstehen, die bezogen auf ihre in Erstreckungsrichtung ausgerichteten Mittellinien, unter Vernachlässigung der gekrümmten Außenkontur des Laufstreifens bzw. des Fahrzeugluftreifens, parallel zueinander verlaufen.

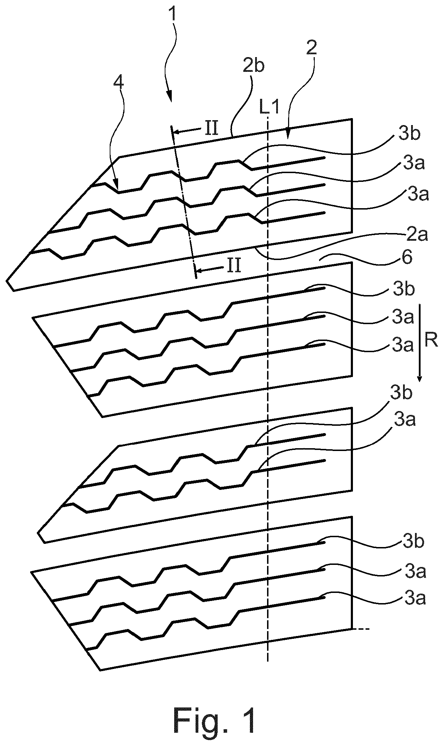

In Fig. 1 sind vier zu einer schulterseitigen Blockreihe 1 gehörende Blöcke 2 gezeigt, welche durch Querrillen 6 voneinander getrennt und laufstreifeninnenseitig durch in Fig. 1 nicht bezeichnete Rillen, beispielsweise kurze zur Umfangsrichtung geneigte Rillen oder zu Schrägrillen gehörende Rillenabschnitte, begrenzt sind. Der seitliche Rand der Bodenaufstandsfläche ist durch eine gestrichelte Linie L₁ gekennzeichnet. Die in Fig. 1 gezeigten schulterseitigen Blöcke 2 gehören zu einem laufrichtungsgebunden ausgeführten Laufstreifen, die zugehörige Abrollrichtung des Reifens bei Vorwärtsfahrt ist durch den Pfeil R angedeutet.

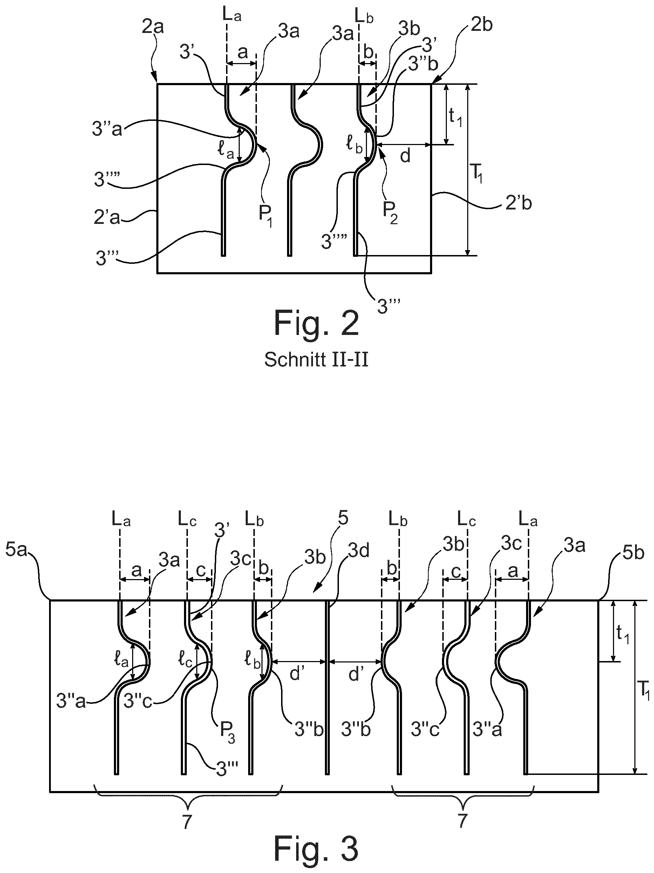

Jeder Block 2 weist an der Laufstreifenperipherie zu den Querrillen 6 eine beim Abrollen des Fahrzeugluftreifens bei Vorwärtsfahrt zuerst in die Bodenaufstandsfläche eintretende einlaufenden Blockkante 2a und eine aus der Bodenaufstandsfläche auslaufende Blockkante 2b auf, wobei die Blockkanten 2a, 2b in Draufsicht weitgehend parallel zueinander sowie beim gezeigten Ausführungsbeispiel zur axialen Richtung unter einem Winkel von 5° bis 20° verlaufen. Ferner weist jeder Block 2 eine in bekannter Weise an die Blockkante 2a anschließende Blockflanke 2'a und eine an die Blockkante 2b anschließende Blockflanke 2'b auf, wobei die Blockflanken 2'a, 2'b insbesondere in radialer Richtung verlaufen (Fig. 2).

Die Blöcke 2 sind jeweils mit zumindest einem Einschnitt 3a und zumindest einem Einschnitt 3b versehen, wobei sich der Einschnitt 3a vom Einschnitt 3b, wie noch erläutert wird, hinsichtlich seines Verlaufes in radialer Richtung unterscheidet. Bei der in Fig. 1 gezeigten Ausführung sind in den Blöcken 2 entweder zwei Einschnitte 3a und ein Einschnitt 3b oder je ein Einschnitt 3a, 3b vorhanden. Die Einschnitte 3a, 3b sind jeweils gleichmäßig über die Umfangserstreckung des jeweiligen Blockes 2 verteilt angeordnet und weisen in Draufsicht und in ihrer Erstreckungsrichtung Mittellinien auf, die parallel zu den Blockkanten 2a, 2b verlaufen. Der in jedem Block 2 verlaufende einzige Einschnitt 3b verläuft benachbart zur auslaufenden Blockkante 2b.

Jeder Einschnitt 3a, 3b weist beim gezeigten Ausführungsbeispiel in Draufsicht innerhalb der Bodenaufstandsfläche einen Hauptabschnitt 4 auf, welcher in die den Block 2 laufstreifeninnenseitig begrenzende Rille einmündet und in Draufsicht in der Gestalt von aneinander anschließenden, abwechselnd in die eine und in die andere Umfangsrichtung weisenden, basislosen gleichschenkeligen Trapezen ausgeführt ist. Bei alternativen Ausführungen verlaufen die Einschnitte 3a, 3b in Draufsicht beispielsweise gerade sowie zumindest abschnittsweise zick-zack- oder wellenförmig.

Jeder Einschnitt 3a, 3b weist eine vorzugsweise konstante Breite von 0,4 mm bis 1,0 mm sowie in radialer Richtung an seiner tiefsten Stelle eine Tiefe T₁ (Fig. 2) von 70% bis 100% der Profiltiefe auf.

Fig. 2 zeigt einen Querschnitt durch den in Fig.1 obersten schulterseitigen Block 2 mit zwei Einschnitten 3a und einem Einschnitt 3b. Gemäß Fig. 2 weist der Einschnitt 3a, im Querschnitt und in radialer Richtung betrachtet, einen in radialer Richtung verlaufenden radial äußeren Abschnitt 3', einen bogenartig verlaufenden mittleren Abschnitt 3"a und einen in radialer Richtung verlaufenden radial inneren Abschnitt 3''' auf. Der Einschnitt 3b weist auf analoge Weise einen radial äußeren Abschnitt 3', einen bogenartig verlaufenden mittleren Abschnitt 3"b und einen radial inneren Abschnitt 3''' auf. Beim gezeigten Ausführungsbeispiel sind an den Übergängen der Abschnitte 3', 3"a und 3"b, 3''' Übergangsrundungen 3"" ausgebildet, sodass die Abschnitte jedes Einschnittes 3a, 3b, im Querschnitt betrachtet, knickfrei ineinander übergehen. Der radial innere Abschnitt 3''' der Einschnitte 3a, 3b verläuft - unterbrochen durch den jeweiligen mittleren Abschnitt 3"a, 3"b - im Wesentlichen in Fortsetzung des radial äußeren Abschnittes 3'.

Der bogenartig verlaufende mittlere Abschnitt 3"a jedes Einschnittes 3a weist, im Querschnitt des Einschnittes 3a betrachtet, in Richtung der an die auslaufende Blockkante 2b anschließenden Blockflanke 2'b und weist, ebenfalls im Querschnitt des Einschnittes 3a betrachtet, in radialer Richtung eine Erstreckungslänge lₐ von 2,0 mm bis 3,5 mm, insbesondere von 2,6 mm bis 3,0 mm, auf. In Fig. 2 ist eine in radialer Richtung sowie durch den radial äußeren Abschnitt 3' des in Fig. 2 linken Einschnittes 3a verlaufende Linie Lₐ eingezeichnet. Der mittlere Abschnitt 3"a ist, im Querschnitt betrachtet, gegenüber der Linie Lₐ derart ausgelenkt, dass er senkrecht zur Linie Lₐ sowie bezogen auf die Mittellinie des Einschnittes 3a eine maximale Auslenkung a von 0,9 mm bis 2,0 mm, insbesondere von in etwa 1,0 mm, aufweist. Ein auf der maximal ausgelenkten Stelle des mittleren Abschnittes 3"a liegender Punkt P₁ liegt in radialer Richtung auf einer Tiefe t₁ von 25% bis 50%, insbesondere von mindestens 32%, der Tiefe T₁ des Einschnitts 3a.

Der bogenartig verlaufende mittlere Abschnitt 3"b des Einschnittes 3b weist, im Querschnitt des Einschnittes 3b betrachtet, ebenfalls in Richtung der an die auslaufende Blockkante 2b anschließenden Blockflanke 2'b und weist, ebenfalls im Querschnitt des Einschnittes 3b betrachtet, in radialer Richtung eine Erstreckungslänge l_{b} auf, welche eine mit der gewählten Erstreckungslänge lₐ übereinstimmende oder im Wesentlichen übereinstimmende Größe aufweist. Der mittlere Abschnitt 3"b weist, im Querschnitt betrachtet, gegenüber einer analog zur Linie Lₐ verlaufenden Linie L_{b} sowie bezogen auf die Mittellinie des Einschnittes 3b eine maximale Auslenkung b von 0,1 mm bis 1,0 mm, insbesondere von in etwa 0,5 mm, auf, wobei die Auslenkung b kleiner ist als die Auslenkung a des mittleren Abschnittes 3"a des Einschnittes 3a. Ein auf der maximal ausgelenkten Stelle des mittlere Abschnittes 3"b liegender Punkt P₂ befindet sich in radialer Richtung, wie der bereits erwähnte Punkt P₁, in der Tiefe t₁. Ferner weist der Punkt P₂ des mittlere Abschnittes 3"b des Einschnittes 3b, im Querschnitt des Einschnittes 3b betrachtet, zu der an die auslaufenden Blockkante 2b anschließenden Blockflanke 2'b einen Abstand d von mindestens 3,0 mm auf.

Fig. 3 zeigt einen Querschnitt durch einen Block 5 eines Laufstreifens mit einer weiteren Ausführungsvariante der Erfindung. Der Block 5 ist bevorzugt ein im mittleren Bereich des Laufstreifens befindlicher Block.

Der Block 5 weist eine bei Vorwärtsfahrt zuerst in die Bodenaufstandsfläche eintretende einlaufende Blockkante 5a und eine aus der Bodenaufstandsfläche auslaufende Blockkante 5b auf und ist mit sieben Einschnitten versehen, welche gleichmäßig über den Block 5 verteilt sind und ebenfalls die bereits erwähnte vorzugweise konstante Breite von 0,4 mm bis 1,0 mm sowie in radialer Richtung die bereits erwähnte Tiefe T₁ von 70% bis 100% der Profiltiefe aufweisen. In Draufsicht können die Einschnitte 5 in bekannter Weise verlaufen. Laufstreifen vorgesehen sein. Bei einer bevorzugten Ausführung ist der Laufstreifen laufrichtungsgebunden gestaltet und weist in seinem mittleren Bereich Blöcke 5 und in schulterseitigen Blockreihen Blöcke 2, wie bereits beschrieben, auf.

Die sieben Einschnitte umfassen einen in der Mitte des Blockes 5 ausgebildeten mittigen und in radialer Richtung verlaufenden Einschnitt 3d und zwei Gruppen 7 von Einschnitten aus jeweils einem Einschnitt 3a, wie bereits beschrieben, einem Einschnitt 3b, wie ebenfalls bereits beschrieben, und einem weiteren Einschnitt 3c. Innerhalb jeder Gruppe 7 sind - ausgehend vom mittigen Einschnitt 3d - nacheinander ein Einschnitt 3b, ein Einschnitt 3c und ein Einschnitt 3a angeordnet. Die in der einen Gruppe 7 befindlichen Einschnitte 3a, 3b 3c sind zu den in der anderen Gruppe 7 befindlichen Einschnitte 3a, 3b 3c bezüglich des mittigen Einschnittes 3d symmetrisch angeordnet und ausgebildet.

Der Einschnitt 3c weist, im Querschnitt betrachtet, ebenfalls einen radial äußeren Abschnitt 3' und einen radial inneren Abschnitt 3''' auf sowie ferner einen zwischen diesen Abschnitten 3', 3''' verlaufenden bogenartig verlaufende mittleren Abschnitt 3"c auf.

Der bogenartig verlaufende mittlere Abschnitt 3"c der Einschnitte 3c weist, im Querschnitt des Einschnittes 3c betrachtet, in radialer Richtung eine Erstreckungslänge l_{c} auf, welche eine mit den gewählten Erstreckungslänge lₐ, l_{b} der mittleren Abschnitte 3"a, 3"b der Einschnitte 3a, 3b übereinstimmende oder im Wesentlichen übereinstimmende Größe aufweist. Der mittlere Abschnitt 3"c weist, im Querschnitt betrachtet, gegenüber einer analog zur Linie Lₐ verlaufenden Linie L_{c} sowie bezogen auf die Mittellinie des Einschnittes 3c eine maximale Auslenkung c von 0,4 mm bis 1,5 mm, insbesondere von etwa 0,7 mm auf, wobei für die Auslenkungen a, b c der bogenartig verlaufenden mittleren Abschnitte 3"a, 3"b, 3"c gilt, dass a > c > b ist. Ein auf der maximal ausgelenkten Stelle des mittleren Abschnitt 3"c liegender Punkt P₃ befindet sich in radialer Richtung, wie der bereits erwähnte Punkt P₁, ebenfalls in der Tiefe t₁.

Die Einschnitte 3a, 3b, 3c sind derart ausgebildet, dass die bogenartig verlaufenden mittleren Abschnitte 3"a, 3"b, 3"c zum mittigen Einschnitt 3d weisen. Die bogenartig verlaufenden mittleren Abschnitte 3"a, 3"b, 3"c der in der einen Gruppe 7 befindlichen Einschnitte 3a, 3b 3c sind daher zu den bogenartig verlaufenden mittleren Abschnitte 3"a, 3"b, 3"c der in der anderen Gruppe 7 befindlichen Einschnitte 3a, 3b 3c konkav gekrümmt. Die mittleren Abschnitte 3"b der Einschnitte 3b weisen, im Querschnitt der Einschnitte 3a, 3b 3c betrachtet, zum mittigen Einschnitt 3d einen Abstand d' von mindestens 3,0 mm auf.

Die Erfindung ist auf die beschriebenen Ausführungsvarianten nicht beschränkt. Insbesondere können, im Querschnitt der Einschnitte betrachtet, die radial äußeren Abschnitte der Einschnitte in Fortsetzung der radial inneren Abschnitte verlaufen. Ferner können Einschnitte mit zwei bogenartig verlaufenden mittleren Abschnitten vorgesehen sein. Bei einer zu Fig. 3 alternativen Variante ist der Block mit einer geraden Anzahl von Einschnitten sowie mit zumindest sechs Einschnitten versehen, wobei die beiden mittigen Einschnitte analog zum Einschnitt 3d ausgeführt sind und daher, im Querschnitt betrachtet, ohne bogenartig verlaufenden mittleren Abschnitten lediglich in radialer Richtung verlaufen.

### Bezugsziffernliste

- 1 ......................: schulterseitige Blockreihe
- 2 ......................: Block
- 2a ....................: einlaufende Blockkante
- 2'a ...................: Blockflanke
- 2b ....................: auslaufende Blockkante
- 2'b ...................: Blockflanke
- 3a, 3b, 3c, 3d ...: Einschnitt
- 3' .....................: radial äußerer Abschnitt
- 3"a, 3"b, 3"c .: mittlerer Abschnitt
- 3''' ..................: radial innerer Abschnitt
- 4 ......................: Hauptabschnitt
- 5 ......................: Block
- 6 ......................: Querrille
- 7 ......................: Gruppe
- a, b, c ...............: maximale Auslenkung
- d, d' .................: Abstand
- lₐ, l_{b}, l_{c} .............: Erstreckungslänge
- L₁, Lₐ, L_{b}, L_{c} ....: Linie
- P₁, P₂, P₃ ..........: Punkt
- R .....................: Pfeil
- t₁, T₁ ................: Tiefe

## Patentansprüche

1. Fahrzeugluftreifen mit einem laufrichtungsgebundenen Laufstreifen mit Profilblöcken (2, 5) mit einem beim Abrollen des Reifens bei Vorwärtsfahrt zuerst in den Untergrund eintretenden einlaufenden Blockrandbereich und einem auslaufenden Blockrandbereich, wobei die Profilblöcke (2, 5) jeweils mit zumindest einer Gruppe (7) aus zumindest zwei Einschnitten (3a, 3b, 3c) versehen sind, welche eine Breite von 0,4 mm bis 1,0 mm und eine Tiefe (T₁) von 70% bis 100% der Profiltiefe aufweisen, in Draufsicht parallel zueinander sowie zur axialer Richtung unter einem Winkel von 0° bis zu 45° verlaufen, im Querschnitt und in radialer Richtung betrachtet einen in radialer Richtung verlaufenden äußeren Abschnitt (3'), zumindest einen bogenartig verlaufenden mittleren Abschnitt (3"a, 3"b, 3"c) und einen in radialer Richtung verlaufenden inneren Abschnitt (3''') aufweisen, wobei innerhalb jeder Gruppe (7) von Einschnitten (3a, 3b, 3c) die radial äußeren und die radial inneren Abschnitte (3', 3''') eine übereinstimmende radiale Erstreckung aufweisen und die bogenartig verlaufenden mittleren Abschnitte (3"a, 3"b, 3"c) gleich orientiert sind und wobei Profilblöcke (2, 5) vorgesehen sind, die eine Gruppe (7) von Einschnitten (3a, 3b, 3c) enthalten, deren bogenartig verlaufenden mittleren Abschnitte (3"a, 3"b, 3"c) vom einlaufenden Blockrandbereich wegweisen,
**dadurch geknnzeichnet,**
dass die mittleren Abschnitte (3"a, 3"b, 3"c) der zu jener Gruppe (2) gehörenden Einschnitte (3a, 3b, 3c), deren bogenartig verlaufenden mittleren Abschnitte (3"a, 3"b, 3"c) vom einlaufenden Blockrandbereich wegweisen, im Querschnitt betrachtet, senkrecht zu einer in radialer Richtung durch den äußeren Abschnitt (3') verlaufenden Linie (Lₐ, L_{b}, L_{c}), bezogen auf die Mittellinie der Einschnitte (3a, 3b, 3c) unterschiedliche maximale Auslenkungen (a, b, c) aufweisen, wobei die maximale Auslenkung (a) des mittleren Abschnittes (3"a) des am nächsten zum einlaufenden Blockrandbereich befindlichen Einschnittes (3a) größer ist als die maximale Auslenkung (b) des mittleren Abschnittes (3"b) des am nächsten zum auslaufenden Blockrandbereich befindlichen Einschnittes (3b).

2. Fahrzeugluftreifen nach Anspruch 1, **dadurch gekennzeichnet, dass** die maximale Auslenkung (a) des vom einlaufenden Blockrandbereich wegweisenden bogenartig verlaufenden mittleren Abschnittes (3"a) des am nächsten zum einlaufenden Blockrandbereich befindlichen Einschnittes (3a) 0,9 mm bis 2,0 mm beträgt.

3. Fahrzeugluftreifen nach Anspruch 1 oder 2, **dadurch gekennzeichnet, dass** die maximale Auslenkung (b) des vom einlaufenden Blockrandbereich wegweisenden bogenartig verlaufenden mittleren Abschnittes (3"b) des am nächsten zum auslaufenden Blockrandbereich befindlichen Einschnittes (3b) 0,1 mm bis 1,0 mm beträgt.

4. Fahrzeugluftreifen nach einem der Ansprüche 1 bis 3, **dadurch gekennzeichnet, dass** Profilblöcke (2, 5) mit einer Gruppe (7) aus zwei Einschnitten (3a, 3b, 3c) mit vom einlaufenden Blockrandbereich wegweisenden bogenartigen mittleren Abschnitten (3"b) vorgesehen sind.

5. Fahrzeugluftreifen nach einem der Ansprüche 1 bis 4, **dadurch gekennzeichnet, dass** Profilblöcke (2, 5) mit einer Gruppe (7) aus drei Einschnitten (3a, 3b, 3c) mit vom einlaufenden Blockrandbereich wegweisenden bogenartigen mittleren Abschnitten (3"b) vorgesehen sind.

6. Fahrzeugluftreifen nach Anspruch 5, **dadurch gekennzeichnet, dass** die maximale Auslenkung (c) des vom einlaufenden Blockrandbereich wegweisenden bogenartig verlaufenden mittleren Abschnittes (3"c) des von den drei Einschnitten (3a, 3b 3c,) mittleren Einschnittes (3c) zumindest der maximalen Auslenkung (b) des mittleren Abschnittes (3"b) des am nächsten zum auslaufenden Blockrandbereich befindlichen Einschnittes (3b) und höchstens der maximalen Auslenkung (a) des mittleren Abschnittes (3"a) des am nächsten zum einlaufenden Blockrandbereich befindlichen Einschnittes (3a) entspricht.

7. Fahrzeugluftreifen nach einem der Ansprüche 1 bis 6, **dadurch gekennzeichnet, dass**, im Querschnitt betrachtet, ein auf der maximal ausgelenkten Stelle der bogenartig verlaufenden mittleren Abschnitte (3"a, 3"b, 3"c) der Einschnitte (3a, 3b, 3c) liegender Punkt (P₁) in einer Tiefe (t₁) von 25% bis 50%, insbesondere von mindestens 32%, der Tiefe (T₁) der Einschnitte (3a, 3b 3c) liegt.

8. Fahrzeugluftreifen nach einem der Ansprüche 1 bis 7, **dadurch gekennzeichnet, dass** innerhalb der Gruppen (2) von Einschnitten (3a, 3b, 3c), deren bogenartig verlaufenden mittleren Abschnitte (3"a, 3"b, 3"c) vom einlaufenden Blockrandbereich wegweisen, Einschnitte vorgesehen sind, welche zwei bogenartig verlaufende mittleren Abschnitte aufweisen.

9. Fahrzeugluftreifen nach einem der Ansprüche 1 bis 8, **dadurch gekennzeichnet, dass** der bogenartig verlaufende mittlere Abschnitt (3"b) des am nächsten zum auslaufenden Blockrandbereich befindlichen Einschnittes (3b), im Querschnitt betrachtet und auf seine Mittellinie bezogen, zur nächstliegenden Blockflanke (2'b) einen Abstand (d) von mindestens 3,0 mm aufweist.

10. Fahrzeugluftreifen nach einem der Ansprüche 1 bis 9, **dadurch gekennzeichnet, dass** Profilblöcke (5) vorgesehen sind, welche mit zwei Gruppen (7) von Einschnitten (3a, 3b 3c) mit bogenartig verlaufenden mittleren Abschnitte (3"a, 3"b, 3"c) versehen sind, wobei die in der einen Gruppe (7) befindlichen Einschnitte (3a, 3b 3c) zu den in der anderen Gruppe (7) befindlichen Einschnitten (3a, 3b 3c), im Querschnitt betrachtet, symmetrisch angeordnet und ausgebildet sind.

11. Fahrzeugluftreifen nach Anspruch 10, **dadurch gekennzeichnet, dass** Profilblöcke (5) vorgesehen sind, welche zwischen den zwei Gruppen (7) von Einschnitten (3a, 3b 3c) zumindest einen in radialer Richtung sowie mittig verlaufenden Einschnitt (3d) aufweisen, insbesondere einen einzigen derartigen Einschnitt (3d) oder zwei derartige Einschnitte aufweisen.

12. Fahrzeugluftreifen nach Anspruch 11, **dadurch gekennzeichnet, dass** der mittlere Abschnitt (3"b) der beiden Einschnitte, welche aus unterschiedlichen Gruppen (2) stammen und benachbart zum mittig verlaufenden Einschnitt (3d) ausgebildet sind, im Querschnitt betrachtet und auf die Mittellinien der Einschnitte (3b, 3d) bezogen, zum mittig verlaufenden Einschnitt (3d) einen Abstand (d) von mindestens 3,0 mm aufweist.

13. Fahrzeugluftreifen nach einem der Ansprüche 1 bis 12, **dadurch gekennzeichnet, dass** die Profilblöcke (5), welche zumindest die Gruppe (7) von Einschnitten (3a, 3b, 3c) enthalten, deren bogenartig verlaufenden mittleren Abschnitte (3"a, 3"b, 3"c) vom einlaufenden Blockrandbereich wegweisen, im zwischen schulterseitigen Blockreihen befindlichen mittleren Bereich des Laufstreifens vorgesehen sind.

14. Fahrzeugluftreifen nach einem der Ansprüche 1 bis 13, **dadurch gekennzeichnet, dass** die Profilblöcke (2), welche zumindest die Gruppe (7) von Einschnitten (3a, 3b, 3c) enthalten, deren bogenartig verlaufenden mittleren Abschnitte (3"a, 3"b, 3"c) vom einlaufenden Blockrandbereich wegweisen, in zumindest einer schulterseitigen Blockreihe (1) vorgesehen sind.

15. Fahrzeugluftreifen nach Anspruch 14, **dadurch gekennzeichnet, dass** die Einschnitte (3a, 3b 3c) aus Gruppen (7) von Einschnitten, welche in Profilblöcken von schulterseitigen Blockreihen (1) ausgebildet sind, in Draufsicht einen innerhalb der Bodenaufstandsfläche befindlichen Hauptabschnitt (4) aufweisen, welcher in Gestalt von aneinander anschließenden, abwechselnd in die eine und in die andere Umfangsrichtung weisenden, basislosen gleichschenkeligen Trapezen ausgeführt ist.

## Claims

1. Pneumatic vehicle tyre with a directional tread comprising profile blocks (2, 5) with a leading block edge region arriving first at ground level when rolling during forward travel and a trailing block edge, wherein the profile blocks (2, 5) are respectively provided with at least one group (7) of at least two sipes (3a, 3b, 3c), which have a width of 0.4 mm to 1.0 mm and a depth (T₁) of 70% to 100% of the profile depth, in plan view run parallel to one another and to the axial direction at an angle of 0° to 45°, when viewed in cross section and in the radial direction have an outer portion (3') running in the radial direction, at least one middle portion (3"a, 3"b, 3"c) running in an arcuate manner, and an inner portion (3''') running in the radial direction, wherein within each group (7) of sipes (3a, 3b, 3c) the radially outer and radially inner portions (3', 3''') have a coinciding radial extent and the arcuately running middle portions (3"a, 3"b, 3"c) are oriented identically and wherein profile blocks (2, 5) that contain a group (7) of sipes (3a, 3b, 3c) of which the arcuately running middle portions (3"a, 3"b, 3"c) are directed away from the leading block edge region are provided,
**characterized in that**
the middle portions (3"a, 3"b, 3"c) of the sipes (3a, 3b, 3c) belonging to that group (2) of which the arcuately running middle portions (3"a, 3"b, 3"c) are directed away from the leading block edge region have, when viewed in cross section, perpendicularly to a line (Lₐ, L_{b}, L_{c}) passing through the outer portion (3') in the radial direction, with respect to the middle line of the sipes (3a, 3b, 3c), different maximum deflections (a, b, c), wherein the maximum deflection (a) of the middle portion (3"a) of the sipe (3a) that is closest to the leading block edge region is greater than the maximum extent (b) of the middle portion (3"b) of the sipe (3b) that is closest to the trailing block edge region.

2. Pneumatic vehicle tyre according to Claim 1, **characterized in that** the maximum deflection (a) of the arcuately running middle portion (3"a), directed away from the leading block edge region, of the sipe (3a) that is closest to the leading block edge region is 0.9 mm to 2.0 mm.

3. Pneumatic vehicle tyre according to Claim 1 or 2, **characterized in that** the maximum deflection (b) of the arcuately running middle portion (3"b), directed away from the leading block edge region, of the sipe (3b) that is closest to the trailing block edge region is 0.1 mm to 1.0 mm.

4. Pneumatic vehicle tyre according to one of Claims 1 to 3, **characterized in that** profile blocks (2, 5) comprising a group (7) of two sipes (3a, 3b, 3c) with arcuate middle portions (3"b) directed away from the leading block edge region are provided.

5. Pneumatic vehicle tyre according to one of Claims 1 to 4, **characterized in that** profile blocks (2, 5) comprising a group (7) of three sipes (3a, 3b, 3c) with arcuate middle portions (3"b) directed away from the leading block edge region are provided.

6. Pneumatic vehicle tyre according to Claim 5, **characterized in that** the maximum deflection (c) of the arcuately running middle portion (3"c), directed away from the leading block edge region, of the middle sipe (3c) of the three sipes (3a, 3b, 3c) corresponds at least to the maximum deflection (b) of the middle portion (3"b) of the sipe (3b) that is closest to the trailing block edge region and at most to the maximum deflection (a) of the middle portion (3"a) of the sipe (3a) that is closest to the leading block edge region.

7. Pneumatic vehicle tyre according to one of Claims 1 to 6, **characterized in that**, when viewed in cross section, the point (P₁) lying at the maximally deflected location of the arcuately running middle portions (3"a, 3"b, 3"c) of the sipes (3a, 3b, 3c) lies at a depth (t₁) of 25% to 50%, in particular of at least 32%, of the depth (T₁) of the sipes (3a, 3b, 3c) .

8. Pneumatic vehicle tyre according to one of Claims 1 to 7, **characterized in that**, within the groups (2) of sipes (3a, 3b, 3c) of which the arcuately running middle portions (3"a, 3"b, 3"c) are directed away from the leading block edge region, sipes which have two arcuately running middle portions are provided.

9. Pneumatic vehicle tyre according to one of Claims 1 to 8, **characterized in that** the arcuately running middle portion (3"b) of the sipe (3b) that is closest to the trailing block edge region has, when viewed in cross section and with respect to its middle line, a distance (d) from the closest block flank (2'b) of at least 3.0 mm.

10. Pneumatic vehicle tyre according to one of Claims 1 to 9, **characterized in that** profile blocks (5) which are provided with two groups (7) of sipes (3a, 3b, 3c) with arcuately running middle portions (3"a, 3"b, 3"c) are provided, wherein the sipes (3a, 3b, 3c) that are in one group (7) are arranged and formed symmetrically in relation to the sipes (3a, 3b, 3c) that are in the other group (7), when viewed in cross section.

11. Pneumatic vehicle tyre according to Claim 10, **characterized in that** profile blocks (5) which have between the two groups (7) of sipes (3a, 3b, 3c) at least one sipe (3d) running in the radial direction and centrally, in particular have a single such sipe (3d) or two such sipes, are provided.

12. Pneumatic vehicle tyre according to Claim 11, **characterized in that** the middle portion (3"b) of the two sipes that come from different groups (2) and are formed adjacent to the centrally running sipe (3d) have, when viewed in cross section and with respect to the middle lines of the sipes (3b, 3d), a distance (d) from the centrally running sipe (3d) of at least 3.0 mm.

13. Pneumatic vehicle tyre according to one of Claims 1 to 12, **characterized in that** the profile blocks (5) that contain at least the group (7) of sipes (3a, 3b, 3c) of which the arcuately running middle portions (3"a, 3"b, 3"c) are directed away from the leading block edge region are provided in the middle region of the tread located between shoulder-side rows of blocks.

14. Pneumatic vehicle tyre according to one of Claims 1 to 13, **characterized in that** the profile blocks (2) that contain at least the group (7) of sipes (3a, 3b, 3c) of which the arcuately running middle portions (3"a, 3"b, 3"c) are directed away from the leading block edge region are provided in at least one shoulder-side row of blocks (1).

15. Pneumatic vehicle tyre according to Claim 14, **characterized in that** the sipes (3a, 3b, 3c) of groups (7) of sipes that are formed in profile blocks of shoulder-side rows of blocks (1) have in plan view a main portion (4) which is within the ground contact area and is designed in the form of baseless isosceles trapezoids adjoining one another, facing alternately in one circumferential direction and then the other.

## Revendications

1. Pneu de véhicule muni d'une bande de roulement directionnelle munie de blocs profilés (2, 5) munis d'une zone de bord de bloc entrante pénétrant en premier dans le sol lors du roulement du pneu en marche avant et d'une zone de bord de bloc sortante, les blocs profilés (2, 5) étant chacun munis d'au moins un groupe (7) d'au moins deux entailles (3a, 3b, 3c), qui présentent une largeur de 0,4 mm à 1,0 mm et une profondeur (T₁) de 70 % à 100 % de la profondeur de profilé, s'étendent en vue de dessus parallèlement les unes aux autres et à un angle de 0° à 45° par rapport à la direction axiale, présentent dans la section transversale et dans la direction radiale une section extérieure (3') s'étendant dans la direction radiale, au moins une section centrale s'étendant en arc (3"a, 3"b, 3"c) et une section intérieure (3''') s'étendant dans la direction radiale, au sein de chaque groupe (7) d'entailles (3a, 3b, 3c), les sections radialement extérieures et radialement intérieures (3', 3''') présentant une étendue radiale coïncidente et les sections centrales s'étendant en arc (3"a, 3"b, 3"c) étant de même orientation, et des blocs profilés (2, 5) étant prévus, qui contiennent un groupe (7) d'entailles (3a, 3b, 3c), dont les sections centrales s'étendant en arc (3"a, 3"b, 3"c) s'éloignent de la zone de bord de bloc entrante,
**caractérisé en ce que**
les sections centrales (3"a, 3"b, 3"c) des entailles (3a, 3b, 3c) appartenant au groupe (2), dont les sections centrales s'étendant en arc (3"a, 3"b, 3"c) s'éloignent de la zone de bord de bloc entrante, présentent, dans la section transversale, des déviations maximales différentes (a, b, c), par rapport à la ligne centrale des entailles (3a, 3b, 3c), perpendiculairement à une ligne (Lₐ, L_{b}, L_{c}) s'étendant dans la direction radiale au travers de la section extérieure (3'), la déviation maximale (a) de la section centrale (3"a) de l'entaille (3a) se trouvant le plus près de la zone de bord de bloc entrante étant supérieure à la déviation maximale (b) de la section centrale (3"b) de l'entaille (3b) se trouvant le plus près de la zone de bord de bloc sortante.

2. Pneu de véhicule selon la revendication 1, **caractérisé en ce que** la déviation maximale (a) de la section centrale s'étendant en arc (3"), s'éloignant de la zone de bord de bloc entrante, de l'entaille (3a) se trouvant le plus près de la zone de bord de bloc entrante est de 0,9 mm à 2,0 mm.

3. Pneu de véhicule selon la revendication 1 ou 2, **caractérisé en ce que** la déviation maximale (b) de la section centrale s'étendant en arc (3"), s'éloignant de la zone de bord de bloc entrante, de l'entaille (3b) se trouvant le plus près de la zone de bord de bloc sortante est de 0,1 mm à 1,0 mm.

4. Pneu de véhicule selon l'une quelconque des revendications 1 à 3, **caractérisé en ce que** des blocs profilés (2, 5) munis d'un groupe (7) de deux entailles (3a, 3b, 3c) munies de sections centrales en arc (3"b) s'éloignant de la zone de bord de bloc entrante sont prévus.

5. Pneu de véhicule selon l'une quelconque des revendications 1 à 4, **caractérisé en ce que** des blocs profilés (2, 5) munis d'un groupe (7) de trois entailles (3a, 3b, 3c) munies de sections centrales en arc (3"b) s'éloignant de la zone de bord de bloc entrante sont prévus.

6. Pneu de véhicule selon la revendication 5, **caractérisé en ce que** la déviation maximale (c) de la section centrale s'étendant en arc (3"c), s'éloignant de la zone de bord de bloc entrante, de l'entaille centrale (3c) parmi les trois entailles (3a, 3b, 3c) correspond au moins à la déviation maximale (b) de la section centrale (3"b) de l'entaille (3b) se trouvant le plus près de la zone de bord de bloc sortante et au plus à la déviation maximale (a) de la section centrale (3"a) de l'entaille (3a) se trouvant le plus près de la zone de bord de bloc entrante.

7. Pneu de véhicule selon l'une quelconque des revendications 1 à 6, **caractérisé en ce que**, dans la section transversale, un point (P₁) situé à l'emplacement dévié de manière maximale des sections centrales s'étendant en arc (3"a, 3"b, 3"c) des entailles (3a, 3b, 3c) se situe à une profondeur (t₁) de 25 % à 50 %, notamment d'au moins 32 %, de la profondeur (T₁) des entailles (3a, 3b, 3c).

8. Pneu de véhicule selon l'une quelconque des revendications 1 à 7, **caractérisé en ce qu'**au sein des groupes (2) d'entailles (3a, 3b, 3c), dont les sections centrales s'étendant en arc (3"a, 3"b, 3"c) s'éloignent de la zone de bord de bloc entrante, des entailles sont prévues, qui comprennent deux sections centrales s'étendant en arc.

9. Pneu de véhicule selon l'une quelconque des revendications 1 à 8, **caractérisé en ce que** la section centrale s'étendant en arc (3"b) de l'entaille (3b) se trouvant le plus près de la zone de bord de bloc sortante présente, dans la section transversale et par rapport à sa ligne centrale, une distance (d) d'au moins 3,0 mm par rapport au flanc de bloc le plus proche (2'b).

10. Pneu de véhicule selon l'une quelconque des revendications 1 à 9, **caractérisé en ce que** des blocs profilés (5) sont prévus, qui sont munis de deux groupes (7) d'entailles (3a, 3b, 3c) munies de sections centrales s'étendant en arc (3"a, 3"b, 3"c), les entailles (3a, 3b, 3c) se trouvant dans un groupe (7) étant agencées et configurées symétriquement, dans la section transversale, par rapport aux entailles (3a, 3b, 3c) se trouvant dans l'autre groupe (7).

11. Pneu de véhicule selon la revendication 10, **caractérisé en ce que** des blocs profilés (5) sont prévus, qui comprennent entre les deux groupes (7) d'entailles (3a, 3b, 3c) au moins une entaille (3d) s'étendant dans la direction radiale et au milieu, notamment une telle entaille (3d) individuelle ou deux telles entailles.

12. Pneu de véhicule selon la revendication 11, **caractérisé en ce que** la section centrale (3"b) des deux entailles, qui sont issues de groupes (2) différents et sont formées en position voisine de l'entaille (3d) s'étendant au milieu, présente, dans la section transversale et par rapport aux lignes centrales des entailles (3b, 3d), une distance (d) d'au moins 3,0 mm par rapport à l'entaille (3d) s'étendant au milieu.

13. Pneu de véhicule selon l'une quelconque des revendications 1 à 12, **caractérisé en ce que** les blocs profilés (5), qui contiennent au moins le groupe (7) d'entailles (3a, 3b, 3c), dont les sections centrales s'étendant en arc (3"a, 3"b, 3"c) s'éloignent de la zone de bord de bloc entrante, sont prévus dans la zone centrale de la bande de roulement se trouvant entre des séries de blocs du côté de l'épaulement.

14. Pneu de véhicule selon l'une quelconque des revendications 1 à 13, **caractérisé en ce que** les blocs profilés (2), qui contiennent au moins le groupe (7) d'entailles (3a, 3b, 3c), dont les sections centrales s'étendant en arc (3"a, 3"b, 3"c) s'éloignent de la zone de bord de bloc entrante, sont prévus dans au moins une série de blocs (1) du côté de l'épaulement.

15. Pneu de véhicule selon la revendication 14, **caractérisé en ce que** les entailles (3a, 3b, 3c) de groupes (7) d'entailles, qui sont formées dans des blocs profilés de séries de blocs (1) du côté de l'épaulement, présentent en vue de dessus une section principale (4) se trouvant à l'intérieur de la surface au sol, qui est conçue sous la forme de trapèzes isocèles sans base adjacents les uns aux autres, dirigés en alternance dans l'une et l'autre direction périphérique.
